# FASCICULE DE BREVET EUROPEEN

(11) **EP 2 125 661 B1**
(45) Date de publication et mention de la délivrance du brevet: **14.07.2010**
(21) Numéro de dépôt: 07872430.9
(22) Date de dépôt: 21.12.2007
(51) Int. Cl.: C04B 35/482, C04B 38/00

(54) **PROCEDE DE FABRICATION D'UN MATERIAU CERAMIQUE REFRACTAIRE A HAUT TEMPERATURE DE SOLIDUS**
VERFAHREN ZUR HERSTELLUNG EINES REFRAKTÄREN KERAMIKMATERIALS MIT HOHER SOLIDUSTEMPERATUR
METHOD FOR MAKING A REFRACTORY CERAMIC MATERIAL HAVING A HIGH SOLIDUS TEMPERATURE

(30) Priorité: 21.12.2006 FR 0611177
(43) Date de publication de la demande: 02.12.2009
(73) Titulaire: Commissariat à l'Énergie Atomique et aux Énergies Alternatives, 75015 Paris (FR)
(72) Inventeur: FERRIER, Mélusine, 75010 Paris (FR); PILUSO, Pascal, F-84120 Pertuis (FR)
(74) Mandataire: KATZAROV S.A.
(86) Numéro de dépôt international: PCT/FR2007/002147
(87) Numéro de publication internationale: WO 2008/096072

(56) Documents cités:
- EP-A- 1 772 441
- US-A- 5 681 784
- US-A1- 2005 112 389

## Description

### DOMAINE TECHNIQUE

La présente invention a trait au domaine des matériaux réfractaires et concerne en particulier un procédé de fabrication d'un matériau réfractaire à haute température de solidus.

### ETAT DE LA TECHNIQUE

Dans une centrale nucléaire, une défaillance des moyens d'évacuation de la puissance résiduelle du réacteur nucléaire peut induire une perte du refroidissement du combustible nucléaire. Dans certains cas, cette perte pourrait aboutir à la fusion partielle ou totale du coeur. La probabilité d'un tel accident, bien qu'extrêmement faible, est non nulle.

Afin de prévenir et de gérer les conséquences d'un tel accident tant sur la population que sur l'environnement, on simule un accident grave de coeur de réacteur nucléaire (notamment un Réacteur à Eau sous Pression (REP)) en faisant fondre dans un four à induction, constitué de matériaux réfractaires à base d'oxydes, des tronçons de crayons de combustibles nucléaires préalablement irradiés.

Au cours de ces expériences dans lesquelles on fait varier la température (pouvant aller jusqu'à 2600°C) et l'atmosphère (par exemple neutre ou oxydante), le comportement du combustible nucléaire est étudié, les produits de fission et les actinides relâchés sont identifiés et analysés.

Les pièces réfractaires à base d'oxydes du four doivent au moins répondre aux critères suivants :
- une résistance mécanique jusqu'à une température de 2600°C,
- une étanchéité aux gaz générés lors de l'expérimentation,
- une résistance chimique à différents types d'atmosphères (notamment réductrice, oxydante, neutre, comprenant de l'air, de la vapeur d'eau),
- une résistance chimique pendant au moins 15 minutes à la corrosion et/ou à l'ablation à haute température pouvant être provoquées par des bains constitués d'oxydes et de métaux. De telles interactions sont par exemple générées lors du contact du matériau réfractaire avec le corium. Ce dernier est un magma qui résulte de la fusion à haute température du combustible nucléaire puis de la réaction du combustible fondu avec sa gaine et les éléments de la structure du réacteur nucléaire. Il est le plus souvent composé de bains corrosifs d'oxydes et de métaux, chauffés au-dessus de leur température de fusion ou de solidus. Ces oxydes sont notamment les oxydes d'uranium, de zirconium et de fer.

Afin de répondre à de tels critères, les pièces réfractaires de ces fours étaient fabriquées jusqu'en 2003 en dioxyde de thorium ThO₂, oxyde dont la température de fusion est de 3380°C.

Toutefois, le dioxyde de thorium ThO₂ étant radioactif, il est contraignant à mettre en oeuvre et on cherche à le remplacer par un autre matériau réfractaire non radioactif qui réponde par ailleurs aux critères exposés ci-dessus. Un matériau envisageable est le dioxyde de hafnium HfO₂.

Le dioxyde de hafnium HfO₂ présente trois structures cristallines ayant chacune leur domaine de stabilité en fonction de la température et de la pression. A la pression atmosphérique, ces domaines sont les suivants :
- en dessous de 1700°C : structure monoclinique,
- de 1700°C à 2600°C : structure quadratique,
- de 2600°C à 2810°C : structure cubique,
- au delà de 2810°C : état liquide.

Le dioxyde de hafnium HfO₂ présente une température de fusion de 2810°C et est par ailleurs bien connu pour résister aux interactions chimiques à chaud. Il semble donc constituer un bon candidat pour remplacer le dioxyde de thorium ThO₂ en tant que matériau réfractaire rentrant dans la composition des pièces des fours permettant de réaliser les simulations précitées.

Le dioxyde de hafnium HfO₂ pur présente néanmoins un inconvénient majeur pour les applications à haute température, à savoir que lors de cycles (montée/descente) de températures, sa transformation allotropique de la phase monoclinique vers la phase quadratique s'accompagne d'une contraction (ou d'une expansion volumique lors de la transformation inverse) de 3,4 % entre 1500°C et 1800°C. Cette importante variation volumique a pour conséquence rédhibitoire la fissuration du matériau céramique réfractaire constitué de dioxyde de hafnium HfO₂.

De par le document US 5,681,784, il est connu que cette variation volumique peut être évitée en stabilisant, à l'aide d'additifs, le dioxyde de hafnium HfO₂ dans sa phase cubique (phase haute température). Pour cela, on ajoute, au matériau en dioxyde de hafnium HfO₂, 8 % à 12 % en moles d'oxyde d'yttrium Y₂O₃ et 0,25 % à 4 % en poids d'aides au frittage. Le matériau ainsi constitué présente une température de solidus peu élevée (bien inférieure à 2500°C) qui le rend impropre à son utilisation en tant que matériau réfractaire constitutif des fours de simulation précités.

### EXPOSE DE L'INVENTION

Un des buts de l'invention est donc de réaliser un procédé de fabrication par métallurgie des poudres d'un matériau céramique réfractaire à base de dioxyde de hafnium HfO₂ qui ne se fissure pas lors de cycles de montée et de descente en température incluant l'intervalle 1500°C-1800°C.

Un autre but de l'invention est de réaliser un procédé de fabrication par métallurgie des poudres d'un matériau céramique réfractaire à base de dioxyde de hafnium HfO₂ qui possède une température de solidus supérieure à 2500°C.

L'invention a donc pour objet un procédé de fabrication par métallurgie des poudres d'un matériau céramique réfractaire comprenant :
- des grains de dioxyde de hafnium HfO₂ de structure monoclinique,
- des grains de dioxyde de hafnium HfO₂ de structure cubique stabilisée par de l'oxyde d'yttrium Y₂O₃, l'oxyde d'yttrium Y₂O₃ représentant 0,5 % à 8 % en moles par rapport au nombre total de moles de dioxyde de hafnium HfO₂,
- des pores ouverts qui ne sont pas interconnectés,
- des pores fermés,
le procédé comprenant les étapes successives suivantes :
(i) obtention d'un mélange sec d'une poudre de dioxyde de hafnium HfO₂ et d'une poudre d'oxyde d'yttrium Y₂O₃, chacun de ces oxydes étant mélangé selon les proportions en moles dans lesquelles il se trouve dans le matériau céramique,
(ii) granulation par pelletisation du mélange sec sous agitation afin d'obtenir un mélange granulé, la granulation comprenant la pulvérisation dans le mélange sec d'une solution aqueuse comprenant, par rapport au
poids du mélange sec, 5 % en poids d'alcool polyvinylique (PVA) de masse moléculaire comprise entre 50000 et 90000 g/mol et 5 % en poids de polyéthylène glycol (PEG) de masse moléculaire comprise entre 180 et 420 g/mol,
(iii) séchage du mélange granulé,
(iv) remplissage d'un moule avec le mélange granulé,
(v) pressage isostatique ou semi-isostatique du mélange granulé remplissant le moule afin d'obtenir un mélange compact,
(vi) frittage du mélange compact afin d'obtenir le matériau céramique réfractaire.

Avantageusement, la température de solidus du matériau céramique réfractaire obtenu par le procédé de l'invention est comprise entre 2500°C et 2800°C. La température de solidus est la température en dessous de laquelle les dernières parties liquides du matériau en cours de solidification se sont solidifiées. Elle est considérée à pression atmosphérique.

Par ailleurs, on entend par « pores fermés » des pores ne communiquant pas avec la surface du matériau et par « pores ouverts » des pores communiquant avec la surface du matériau, ces pores ouverts présentant en outre la particularité de ne pas être interconnectés. Optionnellement, pour une partie ou la totalité des pores fermés du matériau céramique réfractaire de l'invention, les pores fermés ne sont pas interconnectés.

Par pressage isostatique, on entend l'application d'une pression uniforme, quelle que soit la direction considérée, sur une poudre contenue dans un sac de pressage flexible maintenu généralement par un moule support rigide.

Par pressage semi-isotatique, on entend un pressage dans lequel un poinçon applique une pression uniaxiale sur la surface la plus simple du mélange compact et une membrane flexible applique une pression isostatique sur l'autre face du mélange compact, soit la face de géométrie plus complexe.

Le pressage isostatique et semi-isostatique sont particulièrement, mais non exclusivement, adaptés à la réalisation de tubes.

Le PVA et le PEG compris dans la solution aqueuse jouent respectivement le rôle de liant et de plastifiant.

De façon générale, la répartition homogène d'une faible quantité de poudre dans une autre est un problème délicat. Ce problème est d'autant plus compliqué que le mélange sec de la présente invention comprend deux poudres dont les densités sont assez différentes (à savoir : densité HfO₂ pur = 9,68 g.cm⁻³; densité Y₂O₃ pur = 5 g.cm⁻³).

Or, il est très important d'obtenir un mélange sec dans lequel ces deux poudres sont réparties de façon homogène puisque l'augmentation de la teneur de Y₂O₃ dans une zone du matériau induit après frittage une importante diminution de la température de solidus dans cette zone, et donc une fragilité de l'ensemble du matériau céramique, ce qui impose son utilisation à des températures inférieures à celles prévues.

Les inventeurs ont découvert que seule une étape de granulation par pelletisation associée à la solution aqueuse spécifique de l'invention permet de produire un mélange granulé dans lequel d'une part les poudres de HfO₂ et de Y₂O₃ sont réparties de façon homogène, et d'autre part les granules denses ont à la fois une tenue mécanique suffisante pour être manipulés et une déformation autorisant un aplatissement au cours de l'étape de pressage. Au sens de l'invention, on entend notamment par « granulation par pelletisation » un procédé dans lequel on pulvérise une suspension organique sur une poudre céramique en rotation dans un plateau tournant incliné.

Après séchage, le mélange granulé obtenu est fritté afin d'obtenir, par le procédé de l'invention, un matériau céramique réfractaire qui est à la fois composite (c'est à dire que les grains de dioxyde de hafnium HfO₂ sont de deux types, à savoir des grains de structure monoclinique et de structure cubique stabilisée par de l'oxyde d'yttrium Y₂O₃) et homogène (ces grains sont répartis de façon homogène dans l'ensemble du volume du matériau).

Ce matériau est non fissuré et une part importante de sa porosité est fermée. Sans vouloir être lié à une quelconque théorie, cette porosité fermée, inattendue, peut être attribuée à l'effet Kirkendall propre au couple HfO₂-Y₂O₃. Préférentiellement, les pores fermés représentent 1 % à 15 % du volume du matériau obtenu par le procédé de l'invention.

Par ailleurs, avantageusement, les pores ouverts de ce matériau représentent moins de 3 %, préférentiellement moins de 1 %, encore plus préférentiellement environ 0,5 %, du volume du matériau. Ces pores ouverts ne sont pas interconnectés, ce qui a pour effet qu'ils ne traversent pas le matériau céramique réfractaire.

La part importante de pores fermés, ainsi que le fait que les pores ouverts ne sont pas interconnectés, renforce l'étanchéité aux gaz du matériau céramique réfractaire selon l'invention et augmente la résistance chimique aux gaz et aux liquides en diminuant la surface d'échange disponible.

De façon inattendue, malgré la quantité significative de plastifiant contenue dans la solution aqueuse, à savoir 5 % en poids de polyéthylène glycol (PEG), le matériau céramique obtenu par le procédé de l'invention n'en reste pas moins suffisamment dense, sa compacité ayant été mesurée comme étant supérieure à 85 %.

Avantageusement, cette compacité a pour effet que le matériau céramique selon l'invention présente une bonne tenue mécanique, en particulier jusqu'à 2600°C, et qu'il confine le plus possible les gaz générés par exemple lors des expériences de simulation précitées. La part importante de pores fermés renforce également l'étanchéité aux gaz du matériau.

La compacité étant le complément de la porosité, le matériau céramique réfractaire obtenu par le procédé de l'invention présente donc une porosité inférieure ou égale à 15 %. Cette porosité est constituée à la fois de pores ouverts qui ne sont pas interconnectés et de pores fermés. L'unité de mesure de la compacité ou de la porosité est le pourcentage en volume.

La porosité ouverte est mesurée par une méthode connue de l'homme du métier telle que la méthode d'immersion réalisée avec une cloche à vide. Sa soustraction à la porosité totale permet d'obtenir la valeur de la porosité fermée.

Quant au caractère non interconnecté de la porosité ouverte du matériau céramique réfractaire obtenu par le procédé de l'invention, il s'apprécie qualitativement à l'aide de méthodes connues de l'homme du métier qui montrent le caractère non traversant de tels pores.

Parmi ces méthodes, figure un test d'étanchéité tel que le test de bullage. Ce test consiste à plonger dans un récipient d'eau un échantillon du matériau, par exemple un tube fermé à une extrémité. De l'air est ensuite injecté sous pression à l'intérieur du tube dont l'extrémité fermée est dirigée vers le haut. Si la porosité ouverte est « traversante », l'air va se propager à travers la paroi du tube jusqu'à ce que des bulles d'air se forment à sa surface externe. En revanche si les pores ouverts ne sont pas interconnectés, le tube est étanche et aucune bulle d'air n'apparaît.

Une autre méthode consiste à réaliser plusieurs coupes dans le matériau et examiner à l'aide d'un cliché réalisé à l'aide d'un Microscope Electronique à Balayage (MEB) en électrons secondaires si les pores ouverts de ce matériau sont interconnectés ou non.

De préférence, ce matériau est tel que le dioxyde de hafnium HfO₂ cubique est stabilisé par 3 % à 8 %, voire 3 % à 5 %, en moles d'oxyde d'yttrium Y₂O₃.

Encore plus préférentiellement, ce matériau est tel que le dioxyde de hafnium HfO₂ cubique est stabilisé par 0,7 % à 1,5 % (préférentiellement 1 %) en moles d'oxyde d'yttrium Y₂O₃, il présente alors une compacité comprise entre 96 % et 97 %.

Une des caractéristiques essentielles du matériau céramique réfractaire selon l'invention est la quantité particulière d'oxyde d'yttrium Y₂O₃ qu'il contient, à savoir une quantité de 0,5 % à 8 % en moles par rapport au nombre total (monoclinique et cubique) de moles de dioxyde de hafnium HfO₂. En effet, une telle quantité fait en sorte que le matériau est composite, à savoir qu'il comprend le dioxyde de hafnium HfO₂ dans deux phases cristallines distinctes et réparties de façon homogène dans l'ensemble du volume du matériau, à savoir une phase comprenant des grains à structure cubique (stabilisée par de l'oxyde d'yttrium Y₂O₃) et une phase comprenant des grains à structure monoclinique. De par ce caractère composite, le matériau n'est que partiellement stabilisé par la formation d'une solution solide dé structure cubique.

Le caractère monoclinique des grains de dioxyde de hafnium HfO₂ ou le caractère cubique des grains de dioxyde de hafnium HfO₂ stabilisé par de l'oxyde d'yttrium Y₂O₃ peut être déterminé par diffraction des rayons X.

Préférentiellement, la microstructure des matériaux céramiques réfractaires obtenus selon le procédé de l'invention et comprenant 0,5 % à 8 % en moles d'oxyde d'yttrium Y₂O₃ est telle que :
- les grains de dioxyde de hafnium HfO₂ de structure monoclinique présentent une forme allongée et/ou une taille moyenne comprise entre 1 µm et 3 µm,
- les grains de dioxyde de hafnium HfO₂ de structure cubique stabilisée par de l'oxyde d'yttrium Y₂O₃ présentent une forme symétrique de section carrée et/ou une taille moyenne comprise entre 3 µm et 15 µm.

Ces caractéristiques microstructurales peuvent notamment être déterminées à l'aide de clichés MEB du matériau, après traitement par une méthode connue de l'homme du métier tel qu'un polissage suivi d'une attaque thermique ou chimique aux joints de grain.

Le caractère composite du matériau céramique réfractaire obtenu par le procédé de l'invention présente l'avantage à la fois i) d'éviter l'expansion volumique précitée et ii), de préserver au mieux une haute température de solidus, la plus proche possible de la température de fusion du dioxyde de hafnium HfO₂ pur, ceci associé au fait que l'on évite l'ajout d'aides au frittage.

Pour les matériaux comprenant 1 % en moles de Y₂O₃ (typiquement pour lesquels les grains du dioxyde de hafnium HfO₂ cubique sont stabilisés par 0,7 % à 1,5 % en moles d'oxyde d'yttrium Y₂O₃), les grains du dioxyde de hafnium HfO₂ cubique sont répartis de manière particulièrement homogène dans l'ensemble du volume du matériau céramique.

La répartition est particulièrement homogène en ce sens qu'on ne peut détecter, à l'aide d'un cliché MEB en mode électrons rétrodiffusés, de ségrégation, d'inclusions de la phase de dioxyde de hafnium HfO₂ cubique au sein de la phase constituée de dioxyde de hafnium HfO₂ monoclinique. Ceci a pour effet de renforcer la résistance à la fissuration lors de montées/descentes en température entre 1500°C et 1800°C.

Cette excellente homogénéité dans la microstructure du matériau implique que ce dernier ne possède pas de points dans lesquels l'oxyde d'yttrium Y₂O₃ est localement plus concentré que dans le reste du matériau. En d'autres termes, la teneur de 0,7 % à 1,5 %, de préférence 1 %, en moles d'oxyde d'yttrium Y₂O₃ est rencontrée en pratique dans l'ensemble du volume du matériau. Ceci a pour avantage que la température de solidus est pratiquement la même en tout point du matériau, à savoir de l'ordre de 2800°C, et qu'elle n'est pas abaissée localement par une teneur en oxyde d'yttrium Y₂O₃ plus élevée ce qui entraînerait des points chauds sources de fragilité mécanique pour le matériau.

D'autres objets, caractéristiques et avantages de l'invention apparaîtront mieux à la lecture de la description qui suit, donnée à titre illustratif et non limitatif.

Les exemples 1 et 2 qui suivent illustrent la fabrication par le procédé de l'invention d'un tube dont l'épaisseur de la paroi est respectivement inférieure et supérieure à 10 mm, cette différence qui se traduisant notamment par des procédés aux conditions de pressage différentes.

### DESCRIPTION DETAILLEE DE L'INVENTION

### 1 - Fabrication par métallurgie des poudres d'un tube constitué de matériau céramique réfractaire comprenant 3 % en moles de Y₂O₃ et dont la paroi est d'une épaisseur inférieure à 10 mm.

### 1.1 - Mélange à sec des poudres de HfO₂ et de Y₂O₃.

Afin de réaliser un matériau céramique réfractaire à base de HfO₂ comprenant 3 % en moles de Y₂O₃, on a mélangé 96,79 g d'une poudre de HfO₂ et 3,21 g d'une poudre de Y₂O₃ représentant respectivement 97 % en moles et 3 % en moles du mélange final.

La poudre de dioxyde de hafnium HfO₂, fournie par la Société CEZUS (France), avait les caractéristiques suivantes :
- Pureté = 99,9 % en poids.
- Surface spécifique (BET) = 12,99 m²/g.
- Taille des particules denses (BET) = 47,6 nm, calculée d'après la surface spécifique en supposant que les grains étaient sphériques.
- Taille moyenne de grains = 2 µm, mesurée par voie humide avec un granulomètre laser après ajout d'un dispersant qui était le polyméthacrylate d'ammonium (vendu sous le nom de DARWAN C).
- Système cristallin : essentiellement monoclinique (densité = 9,7 g.cm⁻³).

La Surface Spécifique (BET) et la taille des particules denses (BET) sont déterminées par adsorption d'azote conformément à la norme ISO 9277:1995 établie à partir de la méthode Brunauer-Emmett-Teller (dite BET).

Les principaux éléments chimiques constituant des impuretés (en ppm en poids par rapport au dioxyde de hafnium HfO₂) étaient les suivants :

| | | | | | | | | |
|---|---|---|---|---|---|---|---|---|
| **Al** | < | 100 | **Co** | < | 20 | **Fe** | < | 100 |
| **Ca** | < | 25 | **Cr** | < | 20 | **Mg** | < | 20 |
| **Cd** | < | 20 | **Cu** | < | 100 | **Mn** | < | 0 |
| **Mo** | < | 20 | **P** | < | 20 | **Ti** | < | 100 |
| **Na** | < | 20 | **Pb** | < | 20 | **V** | < | 20 |
| **Ni** | < | 100 | **Sn** | < | 20 | | | |

La poudre d'oxyde d'yttrium Y₂O₃, fournie par la Société PIDC (USA), avait les caractéristiques suivantes :
- Pureté = 99,999 % en poids.
- Densité = 5,01 g.cm⁻³.
- Surface spécifique (BET) = 2,38 m²/g.
- Taille des particules denses (BET) = 0,5 µm, calculée d'après la surface spécifique en supposant que les grains étaient sphériques.
- Taille moyenne de grains = 3 µm, mesurée par voie humide avec un granulomètre laser après ajout de dispersant DARWAN C.

Les poudres ont été mélangées à sec à l'aide d'un mélangeur de poudres céramiques non spécifique (de type Turbula^{®} dans le cas présent) pendant un temps minimum de 20 minutes.

### 1.2 - Granulation par pelletisation.

Afin de réaliser la granulation par pelletisation du mélange sec de poudres, son agitation a été poursuivie dans un plateau tournant incliné tout en pulvérisant progressivement dans le mélange sec de poudres une solution aqueuse comprenant de l'alcool polyvinylique (PVA) de masse moléculaire comprise entre 50000 et 90000 g/mol et du polyéthylène glycol 300 (PEG 300), la quantité de PVA et la quantité de PEG pulvérisées représentant chacune 5 % en poids par rapport au poids du mélange sec de poudres.

Le PEG 300 est un polyéthylène glycol de masse moléculaire comprise entre 285 et 315 g/mol.

### 1.3 - Séchage.

Le mélange granulé obtenu a été séché à l'étuve à 50°C jusqu'à ce que les granules soient sèches, soit dans le cas présent au bout de 20 minutes. Une température de séchage comprise entre 40°C et 60°C peut également convenir. Elle permet de ne pas trop durcir le liant (PVA), ce qui rendrait les granules incompressibles lors du pressage.

### 1.4 - Tamisage.

Le mélange granulé et séché obtenu par « voie sèche » lors des étapes précédentes a ensuite été introduit dans une tamiseuse automatique pour subir un double tamisage afin qu'il ne contienne plus que des granules dont la taille était comprise entre 60 et 250 µm. Cette taille de granules est suffisamment grosse pour présenter de bonnes propriétés d'écoulement permettant le bon remplissage du moule. Elle est par ailleurs suffisamment petite pour que les granules n'induisent pas de défaut de pressage, tel que par exemple un manque local du mélange qui peut être à l'origine d'un macro-pore non-éliminable lors du frittage.

### 1.5 - Pressage.

Afin d'obtenir un mélange compact, un moule pour pressage semi-isostatique de tubes cylindriques circulaires a été utilisé. Ce moule était composé de trois éléments principaux : i) un corps métallique troué (moule support), ii) une gaine plastique souple en polyuréthanne de longueur = 750 mm et de diamètre intérieur = 15,5 mm et iii) un mandrin cylindrique en métal de longueur = 600 mm de diamètre = 9 mm. Le corps métallique était troué pour permettre au fluide (mélange d'eau et d'huile classiquement utilisé dans de telles presses) d'appliquer une pression uniforme sur la gaine plastique en polyuréthanne.

Le dioxyde de hafnium HfO₂ contenu dans le mélange granulé étant très acide, il peut oxyder l'acier ordinaire constituant le mandrin, ce qui peut provoquer sa détérioration, des difficultés de démoulage ou une pollution par le fer du mélange compact. Afin d'éviter une telle oxydation, toute la surface du mandrin métallique a été recouverte de 10 µm d'une première couche de nickel chimique, puis de 10 µm d'une seconde couche de polytétrafluoroéthylène (téflon).

Puis, le mélange des poudres granulées a été introduit entre le mandrin métallique et la gaine plastique. Afin d'améliorer le taux de compaction de la poudre, le remplissage du moule a été effectué lentement et sur une table vibrante, ceci afin d'éviter d'introduire des défauts non éliminables lors du frittage.

Le mélange des poudres granulées a ensuite été soumis au cycle de pressage suivant :
- augmentation de la pression selon une vitesse de 1,5 MPa/s pour atteindre une pression maximum (dite contrainte de mise en forme palier) de 200 MPa qui a été maintenue pendant 120 s,
- diminution de la pression selon une vitesse de 0,2 MPa/s afin d'atteindre la pression atmosphérique.

Alternativement, l'augmentation de la pression pour atteindre la contrainte de mise en forme palier peut être effectuée selon au moins une vitesse comprise entre 0,5 et 2,5 MPa/s, la contrainte de mise en forme palier peut être maintenue pendant une durée comprise entre 60 s et 180 s, la diminution de la pression afin d'atteindre la pression atmosphérique peut être effectuée selon au moins une vitesse comprise entre 0,1 et 1 MPa/s.

Lors du pressage, le mélange granulé était comprimé entre le mandrin fixe et la gaine flexible.

Lorsque le tube cylindrique compact a une paroi d'épaisseur inférieure à 10 mm, la pression maximum est d'au moins de 200 MPa afin d'obtenir un matériau suffisamment compact et ne doit en tous cas pas excéder 250 MPa afin de prévenir toute fissuration du matériau après frittage.

A l'issue de ce pressage, on a obtenu un tube compact aux dimensions suivantes : longueur = 600 mm, diamètre externe = 12 mm et diamètre interne = 9 mm.

### 1.6 Frittage.

Le tube compact a été fritté sous air selon le cycle suivant : montée en température selon une vitesse de 5°C/min jusqu'à une température de 1600°C maintenue pendant un palier de 1 heure, puis descente en température suivant l'inertie du four. Avantageusement, le tube compact présentant une paroi d'épaisseur inférieure à 10 mm, le liant (PVA) et le plastifiant (PEG) ont été éliminés du mélange compact par pyrolyse lors de l'étape de frittage.

Après frittage, on a obtenu un tube cylindrique de section circulaire en matériau céramique réfractaire de diamètre extérieur de 8,3 mm et de diamètre intérieur de 6,8 mm. A noter que d'autres tubes cylindriques à section non circulaires, par exemple elliptiques, pourraient aussi être élaborés, seuls les tubes cylindriques présentant des arrêtes étant peu à même d'être réalisés par pressage semi-isostatique ou isostatique.

Différents cycles de frittage sous air ont été testés pour évaluer l'influence de la température et du temps de palier sur la compacité et la porosité ouverte. Ces tests ont permis de déterminer qu'un cycle de frittage qui peut également convenir comprend le chauffage du mélange compact à une température comprise entre 1550°C et 1650°C, pendant une durée comprise entre 30 et 90 minutes. Si de telles conditions ne sont pas respectées un taux de porosité ouverte peu propice au confinement de gaz peut être obtenu.

Par ailleurs, les inventeurs ont mis en évidence le fait que pour un même cycle de frittage, plus la teneur d'oxyde d'yttrium Y₂O₃ est importante moins le retrait au frittage est grand et plus la température à laquelle le mélange compact commence à densifier est élevée (900°C pour un mélange compact de HfO₂ pur contre 1200°C pour un mélange compact de HfO₂ comprenant 8% en moles de Y₂O₃).

Avantageusement, les températures de solidus du matériau céramique réfractaire de l'invention doivent être comprises entre 2500°C et 2800°C. Pour obtenir ce matériau avec une compacité suffisante, on s'attend donc à appliquer une température de frittage élevée, en tous cas bien supérieure à la limite pouvant être atteinte par les fours de frittage standards qui ne dépassent pas en général 1700°C à 1800°C.

Même si d'autres fours peuvent produire des températures supérieures à 1800°C, ils travaillent généralement sous atmosphère contrôlée et sont peu développés en industrie. Ces fours utilisent le plus souvent des éléments chauffants et des matériaux réfractaires en carbone. Or le carbone interagit avec le dioxyde de hafnium HfO₂, ce qui rend impropre l'utilisation de tels fours pour fritter un mélange de poudres comprenant du HfO₂.

De façon inattendue, bien que l'étape de frittage selon l'invention comprenne un chauffage à des températures voisines de 1600°C, elle permet néanmoins d'obtenir un matériau céramique de compacité suffisante et qui présente une part importante de porosité fermée. Cela autorise par ailleurs l'emploi de fours standards et donc évite toute interaction néfaste avec le carbone.

Il est à noter que les pores ouverts du matériau selon l'invention se sont révélés être des pores ouverts qui ne sont pas interconnectés et qui ne sont donc pas traversants. En d'autres termes, ces pores contenus dans la paroi du tube cylindrique étaient de dimension suffisamment réduites pour que le volume interne du tube ne communique pas avec son volume externe, assurant ainsi une totale imperméabilité entre ces deux volumes. Cela renforce donc le confinement des gaz recherché pour des pièces de fours de simulation.

### 1.7 - Usinage-rectification.

Afin de réaliser une pièce de structure d'un four de simulation, le tube de matériau céramique réfractaire obtenu à l'étape précédente a été rectifié aux dimensions voulues par usinage. L'usinage n'a créé aucune fissure au niveau du matériau.

### 2 - Fabrication par métallurgie des poudres d'un tube cylindrique constitué de matériau céramique réfractaire comprenant 3 % en moles de Y₂O₃ et dont la paroi est d'une épaisseur supérieure à 10 mm.

Afin de tenir compte de problèmes spécifiques rencontrés lors de la fabrication d'un mélange compact de géométrie telle qu'il présente une épaisseur supérieure à 10 mm selon au moins un plan de coupe, le procédé de fabrication selon l'exemple précédent a été modifié afin de réaliser un tube cylindrique dont la paroi était d'épaisseur supérieure à 10 mm.

### 2.1 - Cycle de pressage.

La presse semi-isotatique comprenait une gaine en polyuréthanne de longueur = 30 mm et de diamètre intérieur = 60 mm, ainsi qu'un mandrin cylindrique en métal de longueur = 125 mm et de diamètre = 20,8 mm.

Afin d'obtenir un matériau céramique réfractaire à la fois dense (c'est à dire de compacité supérieure à 85 %), sans défaut d'empilement et ne se fissurant pas, le cycle de pressage de l'exemple précédent a été modifié en appliquant une pression maximum (encore appelée contrainte de mise en forme palier) de 100 MPa et en réalisant la diminution de cette pression en deux étapes afin qu'elle soit plus progressive.

Le protocole utilisé était ainsi le suivant :
- augmentation de la pression selon une vitesse de 1,5 MPa/s pour atteindre la pression maximum (dite contrainte de mise en forme palier) de 100 MPa qui a été maintenue pendant 120 s,
- diminution de cette pression maximum selon une vitesse de 0,5 MPa/s afin d'atteindre une pression intermédiaire de 30 MPa, puis poursuite de la diminution de la pression selon une vitesse de 0,2 MPa/s afin d'atteindre la pression atmosphérique.

Alternativement, la diminution de la contrainte de mise en forme palier peut être effectuée selon une vitesse comprise entre 0,2 et 1 MPa/s afin d'atteindre une pression intermédiaire de 30 MPa et la diminution de la pression intermédiaire peut être effectuée selon une vitesse comprise entre 0,1 et 0,5 MPa/s afin d'atteindre la pression atmosphérique.

La pression maximum peut être au moins de 80 MPa afin d'obtenir un matériau suffisamment compact et ne doit en tous cas pas excéder 150 MPa afin de prévenir toute fissuration du matériau après frittage.

A l'issue de ce pressage, on a obtenu un tube cylindrique compact de section circulaire aux dimensions suivantes : longueur = 130 mm, diamètre externe = 48 mm et diamètre interne = 20,8 mm.

### 2.2 - Déliantage.

Entre l'étape de pressage et l'étape de frittage, une étape de déliantage a été ajoutée pour permettre une élimination de la quantité importante (due à l'épaisseur importante du tube) du liant (PVA) et du plastifiant (PEG) contenus dans le tube compact. Cette élimination doit être suffisamment progressive afin d'éviter toute fissuration du matériau céramique réfractaire lors de l'étape de frittage.

L'étape de déliantage comprenait l'augmentation de la température du tube compact selon une vitesse de 0,2°C/min (vitesse pouvant être comprise entre 0,1°C/min et 0,5°C/min) jusqu'à atteindre une température de 600°C (température pouvant être comprise entre 550°C et 650°C) maintenue pendant 2 heures (durée pouvant être comprise entre 1 et 3 heures).

### 2.3 - Ouverture du tube cylindrique.

Comme cela est courant lors de la réalisation d'un tube cylindrique par pressage semi-isostatique ou isostatique, le mélange granulé a été ajouté en excès afin de réaliser un « bouchon » au-dessus du mandrin et obtenir après frittage un tube cylindrique fermé à une de ses extrémités, c'est à dire un tube cylindrique en forme de creuset. Le tube cylindrique fermé compact obtenu après pressage présentait toutefois un défaut de géométrie à chacune de ses extrémités, à savoir que chaque extrémité présentait un élargissement par rapport au diamètre moyen du tube cylindrique (cet évasement est couramment appelé « patte d'éléphant » dans le domaine des céramiques). Ce défaut est couramment observé lorsque la gaine est mal adaptée au corps métallique troué. Il engendre de fortes contraintes durant le déliantage et le frittage, et peut provoquer une fissuration du tube en matériau céramique réfractaire obtenu après frittage.

Afin d'éviter cette fissuration, entre l'étape de pressage et l'étape de déliantage, le tube cylindrique compact a été découpé transversalement à sec à chaque extrémité de telle sorte qu'il ne présente plus cet évasement à ses extrémités et que le diamètre du tube soit sensiblement le même sur toute sa longueur.

Il ressort clairement de la description ci-dessus que le procédé spécifique de l'invention permet de fabriquer une pièce en matériau céramique réfractaire qui ne se fissure pas lors de cycles de montée et de descente en température incluant l'intervalle 1500°C-1800°C et qui possède une température de solidus supérieure à 2500°C.

## Revendications

1. Procédé de fabrication par métallurgie des poudres d'un matériau céramique réfractaire comprenant :
- des grains de dioxyde de hafnium HfO₂ de structure monoclinique,
- des grains de dioxyde de hafnium HfO₂ de structure cubique stabilisée par de l'oxyde d'yttrium Y₂O₃, ledit oxyde d'yttrium Y₂O₃ représentant 0,5 % à 8 % en moles par rapport au nombre total de moles de dioxyde de hafnium HfO₂,
- des pores ouverts qui ne sont pas interconnectés,
- des pores fermés,
ledit procédé comprenant les étapes successives suivantes :
(i) obtention d'un mélange sec d'une poudre de dioxyde de hafnium HfO₂ et d'une poudre d'oxyde d'yttrium Y₂O₃, chacun de ces oxydes étant mélangé selon les proportions en moles dans lesquelles il se trouve dans ledit matériau céramique,
(ii) granulation par pelletisation dudit mélange sec sous agitation afin d'obtenir un mélange granulé, ladite granulation comprenant la pulvérisation dans ledit mélange sec d'une solution aqueuse comprenant, par rapport au poids dudit mélange sec, 5 % en poids d'alcool polyvinylique (PVA) de masse moléculaire comprise entre 50000 et 90000 g/mol et 5 % en poids de polyéthylène glycol (PEG) de masse moléculaire comprise entre 180 et 420 g/mol,
(iii) séchage dudit mélange granulé,
(iv) remplissage d'un moule avec ledit mélange granulé,
(v) pressage isostatique ou semi-isostatique dudit mélange granulé remplissant ledit moule afin d'obtenir un mélange compact,
(vi) frittage dudit mélange compact afin d'obtenir ledit matériau céramique réfractaire.

2. Procédé de fabrication par métallurgie des poudres selon la revendication 1, **caractérisé en ce que** ledit pressage comprend les étapes successives suivantes :
- l'augmentation de la pression pour atteindre une contrainte de mise en forme palier, selon au moins une vitesse comprise entre 0,5 et 2,5 MPa/s, et préférentiellement égale à 1,5 MPa/s,
- le maintien de ladite contrainte de mise en forme palier pendant une durée comprise entre 60 s et 180 s, et préférentiellement égale à 120 s,
- la diminution de la pression afin d'atteindre la pression atmosphérique, selon au moins une vitesse comprise entre 0,1 et 1 MPa/s, et préférentiellement égale à 0,2 MPa/s.

3. Procédé de fabrication par métallurgie des poudres selon la revendication 2, **caractérisé en ce que** ladite contrainte de mise en forme palier est comprise entre 200 et 250 MPa, et préférentiellement égale à 200 MPa.

4. Procédé de fabrication par métallurgie des poudres selon la revendication 2, **caractérisé en ce que** ladite contrainte de mise en forme palier est comprise entre 80 et 150 MPa, et préférentiellement égale à 100 MPa.

5. Procédé de fabrication par métallurgie des poudres selon la revendication 2 combinée à la revendication 4, **caractérisé en ce que** ladite diminution de la pression comprend :
- la diminution de ladite contrainte de mise en forme palier selon une vitesse comprise entre 0,2 et 1 MPa/s, et préférentiellement égale à 0,5 MPa/s afin d'atteindre une pression intermédiaire de 30 MPa, puis
- la diminution de ladite pression intermédiaire selon une vitesse comprise entre 0,1 et 0,5 MPa/s, et préférentiellement égale à 0,2 MPa/s afin d'atteindre la pression atmosphérique.

6. Procédé de fabrication par métallurgie des poudres selon la revendication 4 ou 5, **caractérisé en ce qu'**entre ladite étape de pressage et ladite étape de frittage, on effectue une étape de déliantage comprenant l'augmentation de la température dudit mélange compact selon une vitesse comprise entre 0,1°C/min et 0,5°C/min, de préférence égale à 0,2°C/min, jusqu'à atteindre une température comprise entre 550°C et 650°C, de préférence égale à 600°C, pendant une durée comprise entre 1 et 3 heures, de préférence égale à 2 heures.

7. Procédé de fabrication par métallurgie des poudres selon l'une quelconque des revendications 4 à 6 **caractérisé en ce que** ledit mélange compact est un tube cylindrique compact et qu'après ladite étape de pressage et avant ladite étape de frittage ou de déliantage, ledit tube est découpé transversalement de telle sorte qu'il ne présente plus d'évasement à ses extrémités.

8. Procédé de fabrication par métallurgie des poudres selon l'une quelconque des revendications précédentes, **caractérisé en ce qu'**avant ladite étape de remplissage, on recouvre d'une première couche de nickel chimique puis d'une seconde couche de polytétrafluoroéthylène, la surface de tout élément métallique dudit moule destinée à venir en contact avec ledit mélange granulé lors de ladite étape de pressage.

9. Procédé de fabrication par métallurgie des poudres selon l'une quelconque des revendications précédentes, **caractérisé en ce que** ladite solution aqueuse comprend, par rapport au poids dudit mélange sec, 5 % en poids d'alcool polyvinylique (PVA) de masse moléculaire comprise entre 50000 et 90000 g/mol et 5 % en poids de polyéthylène glycol de masse moléculaire comprise entre 285 et 315 g/mol (PEG 300).

10. Procédé de fabrication par métallurgie des poudres selon l'une quelconque des revendications précédentes, **caractérisé en ce que** lesdites étapes (i) de mélange et/ou (ii) de granulation sont réalisées sous agitation desdites poudres et/ou dudit mélange sec à l'aide d'un mélangeur de poudres céramiques.

11. Procédé de fabrication par métallurgie des poudres selon l'une quelconque des revendications précédentes, **caractérisé en ce que** ledit séchage comprend le chauffage dudit mélange à une température comprise entre 40°C et 60°C, préférentiellement égale à 50°C.

12. Procédé de fabrication par métallurgie des poudres selon l'une quelconque des revendications précédentes, **caractérisé en ce qu'**après ladite étape de séchage et avant ladite étape de pressage, ledit mélange granulé est tamisé afin qu'il ne contienne plus que des granules dont la taille est comprise entre 60 et 250 µm.

13. Procédé de fabrication par métallurgie des poudres selon l'une quelconque des revendications précédentes, **caractérisé en ce que** ledit frittage comprend le chauffage dudit mélange compact à une température comprise entre 1550°C et 1650°C, de préférence égale à 1600°C, pendant une durée comprise entre 30 et 90 minutes, de préférence égale à 60 minutes.

14. Procédé de fabrication par métallurgie des poudres selon l'une quelconque des revendications précédentes, **caractérisé en ce qu'**après ladite étape de frittage, il comprend en outre une étape d'usinage (vii) dudit matériau céramique réfractaire.

15. Application du procédé selon la revendication 3, dans lequel ledit mélange compact est un tube cylindrique compact dont la paroi présente une épaisseur inférieure à 10 mm.

16. Application du procédé selon l'une quelconque des revendications 4 à 7, dans lequel ledit mélange compact est un tube cylindrique compact dont la paroi présente une épaisseur supérieure à 10 mm.

## Claims

1. A powder metallurgy process for the manufacture of a refractory ceramic material comprising:
- hafnium dioxide HfO₂ grains having a monoclinic structure;
- hafnium dioxide HfO₂ grains having a cubic structure, which is stabilized by yttrium oxide Y₂O₃, said yttrium oxide Y₂O₃ representing 0.5 mol % to 8 mol % relative to the total number of moles of hafnium dioxide HfO₂;
- non-interconnected open pores;
- closed pores;
said process comprising the consecutive steps of:
(i) obtaining a dry mixture of a hafnium dioxide HfO₂ powder and an yttrium oxide Y₂O₃ powder, each of these oxides being mixed in the molar proportions in which it is found in said ceramic material;
(ii) step of granulation by pelletization of said dry mixture under stirring in order to obtain a granulated mixture, said granulation step comprising the spraying, into the dry mixture, of an aqueous solution comprising, relative to the weight of the dry mixture, 5% by weight of polyvinyl alcohol (PVA) having a molecular weight in the range between 50000 and 90000 g/mol and 5% by weight of polyethylene glycol (PEG) having a molecular weight in the range between 180 and 420 g/mol;
(iii) drying of said granulated mixture;
(iv) filling of a mold with said granulated mixture;
(v) isostatical or semi-isostatical pressing of said granulated mixture filling said mold, in order to obtain a compact mixture;
(vi) sintering of said compact mixture in order to obtain said refractory ceramic material.

2. The powder metallurgy manufacturing process according to claim 1, **characterized in that** said pressing comprises the consecutive steps of:
- increase of the pressure up to a plateau shaping stress, according to at least one rate in the range between 0.5 and 2.5 MPa/s, preferably 1.5 MPa/s;
- maintenance of said shaping stress plateau for a duration in the range between 60 s and 180 s, preferably 120 s;
- decrease of the pressure down to atmospheric pressure, according to at least one rate in the range between 0.1 and 1 MPa/s, preferably 0.2 MPa/s.

3. The powder metallurgy manufacturing process according to claim 2, **characterized in that** said shaping stress plateau is in the range between 200 and 250 MPa, preferably 200 MPa.

4. The powder metallurgy manufacturing process according to claim 2, **characterized in that** said shaping stress plateau is in the range between 80 and 150 MPa, preferably 100 MPa.

5. The powder metallurgy manufacturing process according to claim 2, taken in combination with claim 4, **characterized in that** said decrease of the pressure comprises:
- decreasing said shaping stress plateau at a rate in the range between 0.2 and 1 MPa/s, preferably 0.5 MPa/s, in order to reach an intermediate pressure of 30 MPa; and then
- decreasing said intermediate pressure at a rate in the range between 0.1 and 0.5 MPa/s, preferably 0.2 MPa/s, down to atmospheric pressure.

6. The powder metallurgy manufacturing process according to claim 4 or 5, **characterized in that** between said pressing and sintering steps, a debinding step is performed, which comprises increasing the temperature of said compact mixture at a rate in the range between 0.1°C/min and 0.5°C/min, preferably 0.2°C/min, until a temperature in the range between 550°C and 650°C is reached, preferably 600°C, for a duration in the range between 1 and 3 hours, preferably 2 hours.

7. The powder metallurgy manufacturing process according to any one of claims 4 to 6, **characterized in that** said compact mixture is a compact cylindrical tube and **in that**, after said pressing step and before said sintering or debinding step, said tube is cut crosswise so that it no longer shows a flaring shape at its ends.

8. The powder metallurgy manufacturing process according to any one of the preceding claims, **characterized in that** before said filling step, the surface of any metal member of said mold to be brought into contact with said granulated mixture during said pressing step is coated with a first layer of chemical nickel followed by a second layer of polytetrafluoroethylene.

9. The powder metallurgy manufacturing process according to any one of the preceding claims, **characterized in that** said aqueous solution comprises, relative to the weight of said dry mixture, 5% by weight of polyvinyl alcohol (PVA) having a molecular weight in the range between 50000 and 90000 g/mol and 5 % by weight of polyethylene glycol having a molecular weight in the range between 285 and 315 g/mol (PEG 300).

10. The powder metallurgy manufacturing process according to any one of the preceding claims, **characterized in that** said mixing step (i) and/or granulation step (ii) are carried out by stirring said powders and/or said dry mixture by means of a ceramic powder mixer.

11. The powder metallurgy manufacturing process according to any one of the preceding claims, **characterized in that** said drying comprises heating said mixture to a temperature in the range between 40°C and 60°C, preferably 50°C.

12. The powder metallurgy manufacturing process according to any one of the preceding claims, **characterized in that** after said drying step and before said pressing step, said granulated mixture is screened so that it contains only granules with a size in the range between 60 and 250 µm.

13. The powder metallurgy manufacturing process according to any one of the preceding claims, **characterized in that** said sintering comprises heating said compact mixture to a temperature in the range between 1550°C and 1650°C, preferably equal to 1600°C, for a duration in the range between 30 minutes and 90 minutes, preferably equal to 60 minutes.

14. The powder metallurgy manufacturing process according to any one of the preceding claims, **characterized in that** after the sintering step, it further comprises the step of machining (vii) said refractory ceramic material.

15. An application of the process of claim 3, in which said compact mixture is a compact cylindrical tube with a wall having a thickness smaller than 10 mm.

16. An application of the process of any one of claims 4 to 7, in which said compact mixture is a compact cylindrical tube with a wall having a thickness greater than 10 mm.

## Patentansprüche

1. Ein pulvermetallurgisches Verfahren zur Herstellung eines hoch schmelzenden keramischen Materials enthaltend:
- Hafniumdioxid HfO₂ Körner die eine monokline Struktur haben;
- Hafniumdioxid HfO₂ Körner die eine kubische Struktur haben, die durch Yttriumoxid Y₂O₃ stabilisiert ist, dieses Yttriumoxid Y₂O₃ macht 0.5 mol % bis 8 mol % relativ zur gesamten Molanzahl von Hafniumdioxid HfO₂ aus;
- Offene Poren, die nicht miteinander verbunden sind;
- geschlossene Poren;
wobei das Verfahren die aufeinander folgenden Schritte umfasst:
(i) Herstellung einer trockenen Mischung von Hafniumdioxid HfO₂ Pulver und Yttriumdioxid Y₂O₃ Pulver, wobei jedes dieser Oxide in dem molaren Verhältnis gemischt wird in welchem es in besagtem keramischen Material vorhanden ist;
(ii) Granulierung durch Pelletierung dieser trockenen Mischung unter Rühren um eine granulierte Mischung zu erhalten; dieser Granulierungsschritt beinhaltet das Sprühen einer wässrigen Lösung in die trockene Mischung, wobei die wässrige Lösung relativ zum Gewicht der trockenen Mischung 5 Gew% Polyvinylalkohol mit einem Molekulargewicht zwischen 50 000 und 90 000 g/mol und 5 Gew% Polyethylenglykol (PEG) mit einem Molekulargewicht zwischen 180 und 420 g/mol enthält;
(iii) Trocknen dieser granulierten Mischung;
(iv) Füllen eines Formkörpers mit dieser granulierten Mischung;
(v) isostatisches oder semi-isostatisches Pressen dieser granulierten, in den Formkörper gefüllten Mischung, um eine kompakte Mischung zu erhalten;
(vi) Sintern der kompakten Mischung um ein hoch schmelzendes keramisches Material zu erhalten.

2. Ein pulvermetallurgisches Verfahren nach Anspruch 1, **dadurch gekennzeichnet, dass** das Pressen die aufeinander folgenden Schritte umfasst:
Erhöhen des Drucks bis ein formgebendes Spannungsplateau erreicht wird, wobei die Druckerhöhungsgeschwindigkeit mindestens 0.5 bis 2.5 MPa/s beträgt; vorzugsweise 1.5 MPa/s;
Aufrechterhalten des formgebenden Spannungsplateaus für die Dauer zwischen 60 s und 180 s, bevorzugt 120s;
Erniedrigen des Drucks bis zum Atmosphärendruck, wobei die Druckerniedrigungsgeschwindigkeit mindestens 0.1 bis 1 MPa/s beträgt, vorzugsweise 0.2 MPa/s.

3. Ein pulvermetallurgisches Verfahren nach Anspruch 2, **dadurch gekennzeichnet, dass** das formgebende Spannungsplateau 200 bis 250 MPa beträgt, vorzugsweise 200MPa.

4. Ein pulvermetallurgisches Verfahren nach Anspruch 2, **dadurch gekennzeichnet, dass** das formgebende Spannungsplateau 80 bis 150 MPa beträgt, vorzugsweise 100MPa.

5. Ein pulvermetallurgisches Verfahren nach Anspruch 2 in Kombination mit Anspruch 4, **dadurch gekennzeichnet, dass** das Erniedrigen des Druckes umfasst:
Erniedrigen des besagten formgebenden Spannungsplateaus, mit einer Druckerniedrigungsgeschwindigkeit zwischen 0.2 und 1 MPa/s, vorzugsweise 0.5 MPa/s um einen Zwischendruck von 30 MPa zu erreichen,
Erniedrigen des Zwischendrucks bis zum Atmosphärendruck mit einer Druckerniedrigungsgeschwindigkeit zwischen 0.1 und 0.5MPa/s, bevorzugt 0.2 MPa/s.

6. Ein pulvermetallurgisches Verfahren nach Anspruch 4 oder 5, **dadurch gekennzeichnet, dass** zwischen besagtem Pressvorgang und Sintervorgang eine Entbinderung erfolgt, durch Erhöhung der Temperatur der kompakten Mischung mit einer Geschwindigkeit zwischen 0.1°C/min und 0.5°C/min, bevorzugt 0.2°C/min bis eine Temperatur zwischen 550 °C und 650 °C erreicht wird , bevorzugt 600 °C für die Dauer von 1 bis 3 Stunden, bevorzugt 2 Stunden.

7. Ein pulvermetallurgisches Verfahren nach einem der Ansprüche 4 bis 6, **dadurch gekennzeichnet, dass** die besagte kompakte Mischung ein kompaktes zylindrisches Rohr ist und dass nach besagtem Pressvorgang und vor besagtem Sintervorgang oder vor der Entbinderung dieses Rohr quer geschnitten wird, sodass es keine Aufweitung mehr an seinem Ende zeigt.

8. Ein pulvermetallurgisches Verfahren nach einem der vorhergehenden Ansprüche **dadurch gekennzeichnet, dass** vor besagtem Füllvorgang die Oberfläche von jedem metallischen Teil der besagten Form, welches mit der granulierten Mischung während dem Pressvorgang in Kontakt gebracht wird , mit einer ersten Schicht von chemischem Nickel gefolgt von einer zweiten Schicht von Polytetrafluorethylen beschichtet wird.

9. Ein pulvermetallurgisches Verfahren nach einem der vorhergehenden Ansprüche **dadurch gekennzeichnet, dass** besagte wässrige Lösung 5 Gew% relativ zum Gewicht der trockenen Mischung Polyvinylalkohol (PVA) mit einem Molekulargewicht zwischen 50 000 und 90 000 g/mol und 5Gew% Polyethylenglykol mit einem Molekulargewicht zwischen 285 und 315g/mol (PEG 300) enthält.

10. Ein pulvermetallurgisches Verfahren nach einem der vorhergehenden Ansprüche **dadurch gekennzeichnet, dass** der Mischungsschritt (i) und/oder der Granulierungsschritt (ii) durch Durchmischen der besagten Pulver und/ oder der besagten trockenen Mischung durchgeführt wird mit Hilfe eines Pulvermischers für keramische Pulver.

11. Ein pulvermetallurgisches Verfahren nach einem der vorhergehenden Ansprüche **dadurch gekennzeichnet, dass** der Trocknungsvorgang das Erhitzen besagter Mischung auf eine Temperatur zwischen 40 °C und 60 °C beinhaltet, vorzugsweise 50 °C.

12. Ein pulvermetallurgisches Verfahren nach einem der vorhergehenden Ansprüche **dadurch gekennzeichnet, dass** nach dem Trocknungsvorgang und vor dem Pressvorgang besagte granulierte Mischung gesiebt wird, sodass die Mischung nur Körner mit einer Korngrösse zwischen 60 und 250 µm aufweist.

13. Ein pulvermetallurgisches Verfahren nach einem der vorhergehenden Ansprüche **dadurch gekennzeichnet, dass** das Sintern das Erhitzen besagter kompakter Mischung auf eine Temperatur zwischen 1150 °C und 1650 °C beinhaltet, bevorzugt 1600 °C für die Dauer von 30 bis 90 Minuten, vorzugsweise 60 Minuten.

14. Ein pulvermetallurgisches Verfahren nach einem der vorhergehenden Ansprüche **dadurch gekennzeichnet, dass** das Verfahren nach dem Sintervorgang eine weitere Stufe (vii) der Bearbeitung des feuerfesten keramischen Materials umfasst.

15. Verwendung des Verfahrens nach Anspruch 3, wobei die kompakte Mischung ein kompaktes zylindrisches Rohr ist mit einer Wanddicke kleiner als 10 mm.

16. Verwendung des Verfahrens nach einem der Ansprüche 4 bis 7, wobei die kompakte Mischung ein kompaktes zylindrisches Rohr ist mit einer Wanddicke grösserr als 10 mm.
